Europäisches Patentamt

European Patent Office

Office européen des brevets

(19)

(11) **EP 1 007 767 B1**

(12) **EUROPÄISCHE PATENTSCHRIFT**

(45) Veröffentlichungstag und Bekanntmachung des Hinweises auf die Patenterteilung:
**03.04.2002   Patentblatt 2002/14**

(51) Int Cl.⁷: **C25F 3/12**, H01L 21/3063, B01J 19/00

(21) Anmeldenummer: **98943790.0**

(22) Anmeldetag: **27.07.1998**

(86) Internationale Anmeldenummer:
**PCT/EP98/04699**

(87) Internationale Veröffentlichungsnummer:
**WO 99/05344 (04.02.1999 Gazette 1999/05)**

(54) **VERFAHREN ZUR HERSTELLUNG EINES FILTERS**

METHOD FOR PRODUCING A FILTER

PROCEDE DE PRODUCTION D'UN FILTRE

(84) Benannte Vertragsstaaten:
**AT BE CH DE ES FI FR GB IT LI LU NL SE**

(30) Priorität: **28.07.1997  DE 19732476**

(43) Veröffentlichungstag der Anmeldung:
**14.06.2000   Patentblatt 2000/24**

(73) Patentinhaber: **NFT Nanofiltertechnik Gesellschaft mit beschränkter Haftung 61348 Bad Homburg v.d.H. (DE)**

(72) Erfinder:
• **HOFMANN, Wilfried D-81667 München (DE)**

• **SCHEYBANI, Tschangiz D-81677 München (DE)**

(74) Vertreter: **von Bülow, Tam, Dr. Patentanwalt Mailänder Strasse 13 81545 München (DE)**

(56) Entgegenhaltungen:
**DE-A- 2 708 322        DE-A- 4 012 453
DE-A- 4 116 392        US-A- 5 139 624**

## Beschreibung

Die Erfindung betrifft ein Verfahren zur Herstellung eines Filters gemäß dem Oberbegriff des Patentanspruches 1.

Ein derartiges Verfahren ist aus der US 5,139,624 bekannt. Bei diesem Verfahren erfolgt die Herstellung des Filters durch Ätzen eines p- oder n- dotierten Siliziumrohlings. Der Siliziumrohling bildet die Unterseite eines mit Ätzflüssigkeit gefüllten Gefäßes, wobei zur Abdichtung ein O-Ring und Andrückklemmen vorgesehen sind, die den Siliziumrohling gegen das Gefäß drücken. Während des Ätzvorganges ist der Siliziumrohling an die Anode einer Stromquelle angeschlossen und eine Kathode ist in die Ätzflüssigkeit eingetaucht. Der Siliziumrohling bildet somit eine "Arbeitselektrode", die in Abhängigkeit von der Dotierung, der Stromdichte und der Zusammensetzung der Ätzflüssigkeit elektrochemisch perforiert wird.

Die DE 4202454 C1 beschreibt ein ähnliches Ätzverfahren, bei dem eine n- dotierte Siliziumscheibe zur gezielten Erzeugung von Minoritätsladungsträgern zusätzlich mit Licht bestrahlt wird. Die Minoritätsladungsträger bewegen sich zu der mit Ätzflüssigkeit benetzten Seite der Siliziumscheibe, und zwar bevorzugt zu Oberflächenvertiefungen, an denen die elektrische Feldstärke erhöht und der Ätzabtrag besonders stark ist. An diesen Stellen entstehen Löcher, deren Bildung durch die Beleuchtung beeinflußbar ist.

In der US 5,348,627 ist ein Halbleiter-Ätzverfahren beschrieben, bei dem zusätzlich Linsen oder andere optische Vorrichtungen wie reflektierende bzw. teilweise absorbierende Masken vorgesehen sind, durch die die Bestrahlung des Siliziumrohlings beeinflußt werden kann. Die Masken werden zur Erzeugung kollimierter Strahlung verwendet und die Linsen zur Variierung der Lichtintensität. Die optischen Vorrichtungen dienen also zur gezielten "Steuerung" der Richtung der Lichtstrahlen, wodurch erreicht wird, daß nur bestimmte "Zonen", d.h. nur bestimmte zu ätzende Teilbereiche des Siliziumrohlings beleuchtet werden, was mit großem technischen Aufwand verbunden ist.

Ein ähnliches Ätzverfahren zur Herstellung von Löchern bzw. Gräben in n- dotiertem Silizium ist in der EP 0 296 348 A1 beschrieben, bei dem das Substrat ebenfalls als Anode geschaltet ist, an der Unterseite eines mit einem flußsäurehaltigen Elektrolyten gefüllten Gefäßes angeordnet ist und mit Licht bestrahlt wird.

Bei den Verfahren des Standes der Technik, bei denen der zu ätzende Rohling an der Unterseite des Ätzgefäßes angeordnet ist, ist eine Abdichtung der chemisch sehr aggressiven Ätzflüssigkeit schwierig und mit unerwünscht hohem Aufwand und Kosten verbunden.

Bei derartigen Anordnungen kann ferner der Fall auftreten, daß an den Randbereichen des Rohlings die Ätzung schräg zur Oberfläche stattfindet, was unerwünscht ist. Um eine Filterfläche definierter Größe zu erhalten, müssen die Randbereiche nach der Ätzbehandlung abgeschnitten werden, wodurch sich der Herstellaufwand weiter erhöht.

Ein weiteres Problem, das insbesondere bei der Massen-bzw. Serienfertigung von Filtern auftritt, ist die Einhaltung identischer Herstellungsparameter, d.h. die Herstellung von Filtern mit identischen Eigenschaften (Porendurchmesser, Flächendichte der Poren, Filterfläche, etc.). Bei den obigen Verfahren muß nämlich das fertige Filter vom Ätzgefäß abgenommen werden. Dies erfordert eine Entleerung und eine anschließende Neufüllung des Gefäßes, was hinsichtlich der Einhaltung konstanter Prozeßparameter unerwünscht ist.

Andere Filter zum Trennen verschiedener Stoffe in Medien, wie z.B. Fluiden, sind beispielsweise Membranfilter, Netzfilter, Tiefenfilter oder Ultrafilter, die beispielsweise aus Mischungen von Zelluloseazetat und Zellulosenitrat, Zellulosepolymeren, gewebten Nylon- oder Metallfäden, metallischem Silber, Glasfasern und Mikroglasfasern bestehen.

Nachteilig an diesen Filtern ist, daß sie keine genau definierte Lochstruktur haben und insbesondere ihre Porendurchmesser nicht eindeutig definiert sind. Durch die Oberflächenspannung wird in kanalartigen Strukturen des Filters Flüssigkeit festgehalten und bei Anwendung eines bestimmten Druckes wird die Flüssigkeit herausgetrieben. Im sog. Bubble-Test zur Integritätsprüfung von Filtern lautet die entsprechende Formel:

$$P = \frac{K \cdot 4\sigma \cos\theta}{d}$$

P:  Bubble-Point-Druck
d:  Durchmesser der Poren
K:  Formkorrekturfaktor
θ:  Kontaktwinkel zwischen Flüssigkeit und Festkörper
σ:  Oberflächenspannung

In diese experimentell gewonnene Formel geht der Porendurchmesser d ein. Aus der Formel ist aber ersichtlich, daß der Einfluß der übrigen Parameter dazu führt, daß unerwünschte Stoffe oder Partikel mit Abmessungen, die größer als der Näherungswert d für die Lochdurchmesser sind, das Filter dennoch passieren.

Weiterer Nachteil der bekannten Filter ist, daß sie chemisch nicht beständig sind und beispielsweise von diversen Säuren, wie z.B. konzentrierter Salpetersäure, konzentrierter Schwefelsäure oder konzentrierter Salzsäure, zahlreichen Lösungsmitteln, wie u.a. Methylenchlorid, Perchlorethylen etc. und Gasen, wie Ozon, angegriffen werden, was ihre Verwendung problematisch oder in manchen Anwendungsfällen unmöglich macht.

Weiter sind viele bekannte Filter auch nicht temperaturbeständig. Beispielsweise sind herkömmliche Membranfilter aus Polyvinyldichlorid laut Herstellerangaben nur bis ca. 130°C autoklavierbar. Nylon-Netzfilter sind nur im trockenen Zustand zwischen -45°C und +115°C, nicht aber während der Filtration, beständig. Isopore Membranfilter sind lediglich bis ca. 140°C temperaturbeständig.

Ferner steigen die Kosten solcher Filter sehr stark mit dem Filterdurchmesser in Richtung quer zur Fluidstromrichtung an.

Aufgabe der Erfindung ist es daher, ein Verfahren zur Herstellung von Filtern anzugeben, das eine Serienfertigung mit definierter Filterflächengröße, gleichbleibendem und exakt definierbarem Lochdurchmesser und, falls besonders gewünscht, gleichmäßig verteilten oder strukturierten Lochstrukturen ermöglicht und das kostengünstig anwendbar ist. Die Filter sollen eine gute chemische Beständigkeit und eine gute Temperaturbeständigkeit haben.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung besteht in einem elektrochemischen Ätzverfahren, bei dem ein schwach n- oder p-dotierter Halbleiter und insbesondere Silizium je nach Dotierung als Anode oder Kathode geschaltet wird und mit einer Ätzlösung geätzt wird, wobei an dem Halbleiter ein Halteelement angebracht ist, das gegenüber der Ätzlösung chemisch beständig ist. Zum Ätzen wird der am Halteelement befestigte Halbleiter in die Ätzflüssigkeit eingetaucht, bis eine Seite des Halbleiters mit Ätzflüssigkeit benetzt ist. Das Halteelement "berandet" hierbei die mit Ätzflüssigkeit benetzte Fläche des Halbleiters, d.h. durch die Gestaltung des Halteelements kann eine beliebige "scharf abgegrenzte" Filterfläche hergestellt werden.

Die elektrolytische Ätzung beruht auf der Tatsache, daß das elektrische Feld in dem dotierten Halbleiter durch selbst kleinste Vertiefungen bzw. Unregelmäßigkeiten in der planaren Oberfläche des Rohlings zu deren Spitzen oder Bögen hin "verbogen" wird. Minoritätsladungsträger folgen dem elektrischen Feld, was dazu führt, daß die Ätzung primär an den Böden oder Spitzen der Vertiefungen stattfindet. Die Ätzung der vorhandenen Vertiefungen ist also bevorzugt und schafft gut definierte Kanäle in dem Rohling.

Minoritätsladungsträger können durch Beleuchtung mit einer Lichtquelle erzeugt werden, die konstant oder steuerbar sein kann. Der im Rohling fließende Strom bzw. die Konzentration der Minoritätsladungsträger ist dadurch abhängig von der Intensität der Beleuchtung. Durch Einstellung der Verfahrensparameter:

- Ätzdauer
- Konzentration der Ätzlösung
- Dotierung des Rohlings
- angelegtes Potential
- Intensität der Beleuchtung

läßt sich die Verteilung der einzelnen Kanäle und deren Durchmesser einstellen. Man erreicht je nach Dotierung Kanaldurchmesser bis herunter zu 1-2 nm. Die Dotierstoffkonzentration des schwach dotierten Siliziums liegt dabei im Bereich von $10^{15}$ bis $10^{18}$ cm$^{-3}$. Bei Dotierstoffkonzentrationen größer $10^{19}$ cm$^{-3}$ erhält man Kanaldurchmesser von einigen Nanometern bis in den Mikrometerbereich.

Im nanoporösen Bereich mit Kanaldurchmessern kleiner 2nm lassen sich ungeordnete geometrische Anordnungen herstellen, was für viele Filterzwecke jedoch keine Nachteile bringt. Ab dem makroporösen Bereich, der über 50nm liegt, erhält man eine Perforationsstruktur in geometrisch geordneter Anordnung.

Nach einer Weiterbildung der Erfindung können mehrere Filter gleichzeitig geätzt werden, wobei entweder mehrere Halbleiter mit zugeordneten Halteelementen verwendet werden können oder ein Halbleiter, der durch ein entsprechend gestaltetes Halteelement in mehrere "Filterparzellen" unterteilt ist. Dies ermöglicht die Einhaltung identischer Verfahrens-bzw. Filterparameter, was z.B. in Anwendungsbereichen wie der Medizintechnik, der Lebensmittel- oder Reinraumtechnik von besonderer Bedeutung ist.

Nach einer Weiterbildung der Erfindung ist das Halteelement so gestaltet, daß es in Bezug auf die Lichtquelle die Funktion eines "Schirmes" bzw. eines Reflektors hat. Der Schirm bzw. Reflektor kann einstückig mit dem am Rohling befestigten Teil des Halteelements verbunden oder ein separates Teil sein. Das Halteelement kann hierbei z.B. rechteckig sein oder die Form eines Kreiszylinders oder eines Paraboloids haben, in dem die Lichtquelle angeordnet ist. Vorzugsweise ist dieses Halteelement "innen" durch eine Silber- oder Aluminiumbeschichtung verspiegelt. Bei Verwendung eines parabolischen Halteelements lassen sich durch eine Anordnung der Lichtquelle im Brennpunkt achsparallele Lichtstrahlen erzeugen, wodurch eine sehr gleichmäßige Ausleuchtung des Rohlings erreicht wird. Derartige Reflektoren verhindern ferner eine unerwünschte Lichtstreuung und ermöglichen die Verwendung einfacher, kostengünstiger Lichtquellen.

Auf ein und demselben Rohling können auch mehrere Halteelemente bzw. Schirme nebeneinander angeordnet werden, was die Herstellung mehrerer Filterzonen mit unterschiedlichen Filtereigenschaften ermöglicht. Alternativ dazu ist es auch möglich, mehrere solcher Schirme bzw. Reflektoren "ineinanderzuschachteln", wodurch z.B. ringförmig ineinandergeschachtelte Filterparzellen herstellbar sind, die jeweils verschiedene Porendurchmesser aufweisen.

Nach einer Weiterbildung der Erfindung kann vor der elektrolytischen Ätzung eine chemische Ätzung durchgeführt werden, bei der die für die elektrolytische Ätzung notwendigen Vertiefungen in der Oberfläche des Rohlings vorgegeben werden. Die chemische Ätzung kann unter Zuhilfenahme einer Lochmaske durchgeführt werden. Sie ist aber nicht zwingend notwendig, da die Oberflächenstrukturen von Halbleitern nie ganz eben sind.

Nach der Ätzbehandlung des Rohlings kann dieser beispielsweise durch Schneiden in einzelne Stücke zerlegt werden. Die so gebildeten Rohlinge mit Lochstrukturen werden anschließend mit herkömmlichen Halterungen verbunden, um so einen Aufbau zu schaffen, der in einer Leitung mit beliebig geformtem Querschnitt eingesetzt werden kann.

Als Material für den Rohling eignet sich insbesondere Silizium und vorzugsweise monokristallines Silizium. Es können aber auch andere Halbleitermaterialien verwendet werden. Als Materialien für das Halteelement können z.B.

Polyethylen, Platin, Polytetraflourethylen, fluorhaltiger Synthesekautschuk o.ä. verwendet werden, die gegenüber der Ätzlösung chemisch beständig sind.

Als Ätzlösung kann z.B. eine Flußsäurelösung mit einem Gewichtsanteil Flußsäure in der Größenordnung von 1 bis 50 % verwendet werden. Besonders geeignet ist eine Lösung mit einem Flußsäureanteil von 2 bis 25%. Andere, ebenfalls geeignete Lösungen sind in den US-Patenten 5 348 627 und 5 139 624 beschrieben.

Nach einer Weiterbildung der Erfindung kann die Halterung für den Rohling schon vor der Ätzung an einer oder beiden Seiten des Rohlings angebracht werden, wobei die Halterung entsprechend dem späteren Anwendungszweck bzw. entsprechend den Einbaubedingungen des Filters gestaltet sein kann. Das Material für die Halterung muß lediglich gegen das Ätzmittel widerstandsfähig sein. Dadurch kann die Zahl der Herstellungsschritte verringert werden, was Zeit und Kosten spart.

Mit der Erfindung erreicht man folgende Vorteile:

Es lassen sich Filter mit exakt definiertem Durchmesser und Wandstrukturen der Poren herstellen, womit man eine genau definierte Filterwirkung, d.h. eine exakte. Partikeltrennung erhält. Die abgetrennten Partikel, die auf der Oberfläche des Filters bleiben, können auf der Substratoberfläche untersucht werden, ggf. nach Entnahme des Filters aus einer Leitung. Die Filter sind chemisch sehr gut beständig. Insbesondere ist bei Verwendung von Silizium eine gute Beständigkeit gegen Säuren gegeben. Das Filter hat eine hohe Temperaturbeständigkeit. So läßt beispielsweise Silizium Temperaturen bis zu 1000°C und mehr zu. Daher können auch Temperaturschwankungen, die im Verlauf einer Filtrierung auftreten können, ohne Nachteil für das Filter und dessen Filterwirkung in einem größeren Temperaturbereich toleriert werden. Bei herkömmlichen Filtern ist die Filterfunktion nur bis ca. 100°C gegeben.

Die Herstellung ist kostengünstig und einfach. Silizium ist ein billiges Material, das einfach zu verarbeiten ist. Im übrigen hat man bezüglich des Rohlingmaterials eine große Wahlfreiheit. Mit der Erfindung lassen sich somit zusammengefaßt Filter mit extrem kleinen und nach Wunsch definierbaren Kanaldurchmessern in gleichmäßig oder sogar strukturiert verteilter Anordnung herstellen. Anwendungsgebiete sind beispielsweise:

- Luftfiltration in Reinräumen bei der Chip-Herstellung; damit können Partikel mit einem Durchmesser kleiner 0,2 µm separiert werden, was die Herstellung von Chips mit extrem kleinen Leiterstrukturen verbessert;
- Filtration im Bereich der Medizin (z.B. Blutpartikel), Mikrobiologie/Biochemie, Abgastechnik in Verkehr, Luft- und Raumfahrt;
- Zellfraktionierung;
- DNA-Elution;
- u.v.m.

Im folgenden wird die Erfindung anhand eines Ausführungsbeispieles im Zusammenhang mit der Zeichnung ausführlicher erläutert. Es zeigt:

| | |
|---|---|
| Fig. 1 | eine Prinzipskizze zur Erläuterung des Ätzvorganges; |
| Fig. 2 | eine perspektivische Draufsicht eines nach der Erfindung hergestellten Filters; |
| Fig. 3 | ein Filter mit einer Halterung; |
| Fig. 4a bis 4e | verschiedene Draufsichten und einen Querschnitt von nach der Erfindung hergestellten Filtern mit verschiedenen Formen von Rohlingen und Halterungen; |
| Fig. 5 | eine Halterung mit einem kreiszylindrischen Schirm; |
| Fig. 6 | eine Halterung mit einem parabolförmigen Schirm; |
| Fig. 7a und 7b | eine Halterung mit zwei ineinandergeschachtelten parabolförmigen Schirmen; |
| Fig. 8 | eine chargenweise Filterherstellung; und |
| Fig. 9 | eine Prinzipskizze, bei der Rohling auf der mit Ätzflüssigkeit benetzten Seite beleutet wird. |

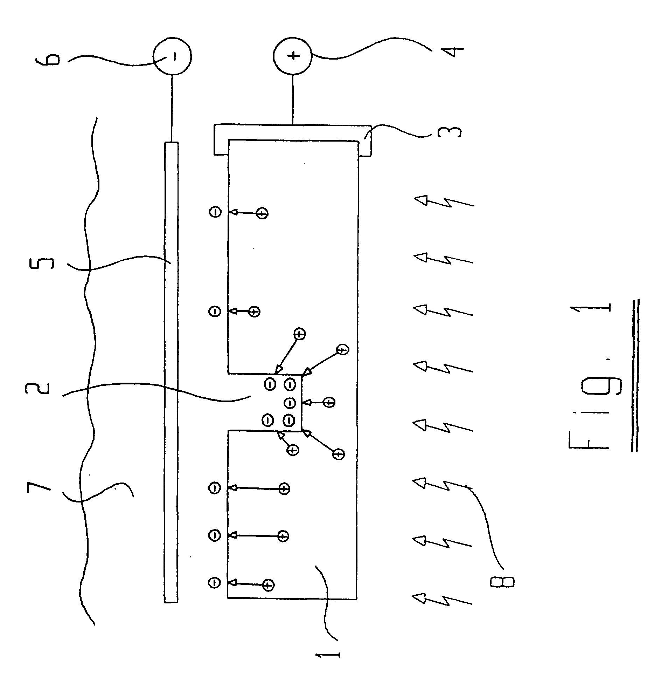

Fig. 1 zeigt einen Rohling 1 in Form eines Siliziumplättchens, das schwach n-dotiert ist und an seiner Oberfläche eine Vertiefung 2 aufweist. Der Rohling 1 ist über eine elektrisch leitfähige Halterung 3 mit der Anode 4 einer Stromquelle verbunden. Eine Gegenelektrode 5 ist mit der Kathode 6 der Stromquelle verbunden. Durch das sich ausbildende elektrische Feld ist die Feldliniendichte im Bereich der Vertiefung 2 größer als in den übrigen Bereichen. Daher gelangen die mit - gekennzeichneten Ladungsträger der Ätzflüssigkeit bevorzugt zum Boden der Vertiefung 2, wodurch die Ätzwirkung der an der Oberseite des Rohlings 1 angreifenden Ätzflüssigkeit 7 an diesen Stellen verstärkt ist. Die mit + gekennzeichneten Minoritätsladungsträger im Rohling 1 werden durch eine Beleuchtung der Unterseite erzeugt, was durch die Lichtpfeile 8 angedeutet ist. Die Beleuchtung kann dabei konstant oder variabel sein.

Der Rohling ist mit einer Konzentration von $10^{15}$ cm$^{-3}$ bis $10^{19}$ cm$^{-3}$ n-dotiert. Das konstante oder zeitlich variable angelegte Potential bzw. der Anoden-Ätzstrom beträgt einige mA/cm$^2$. Die Ätzlösung hat einen Fluoridgehalt von ca. 10%.

Der Ätzvorgang wird solange durchgeführt, bis die Vertiefung 2 vollständig durch den Rohling hindurch geätzt ist und damit ein Durchgangsloch bildet.

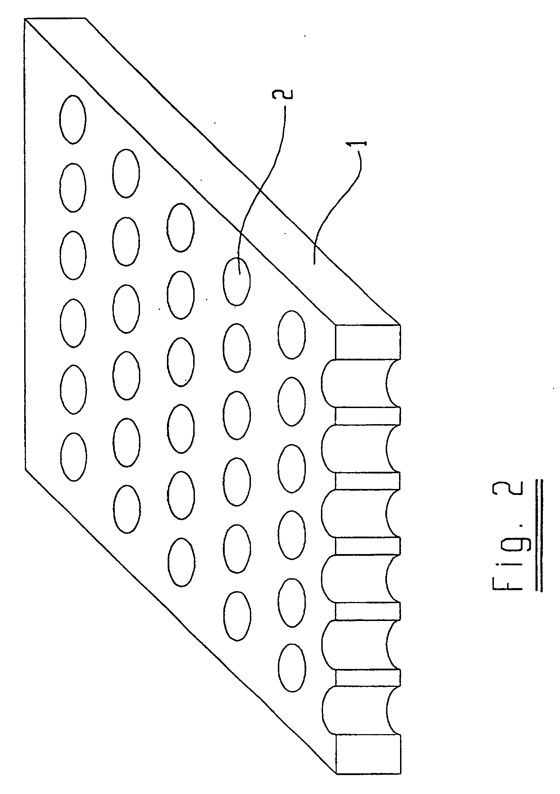

Der Durchmesser dieses Durchgangsloches hängt im wesentlichen von der Dotierung des Rohlings ab, da diese das sich im Rohling ausbildende elektrische Feld beeinflußt. Je schwächer die Dotierung, umso geringer ist der Durchmesser, da der Ätzvorgang dann überwiegend im Boden der Vertiefung 2 stattfindet und die Seitenwände der Vertiefung weniger weggeätzt werden. Ein fertig geätztes Filter ist schematisch in Fig. 2 gezeigt.

Eine regelmäßige Lochstruktur erhält man nach einem anderen Ausführungsbeispiel der Erfindung dadurch, daß in einem ersten Arbeitsschritt eine Lochmaske auf die Oberseite eines Substrates aufgebracht und das Substrat an den Löchern der Lochmaske in herkömmlicher Weise chemisch geätzt wird. Dadurch wird für das anschließende elektrochemische Ätzen eine Oberfläche mit gleichmäßig angeordneten und damit strukturierten Vertiefungen erzeugt, an denen dann der weitere, oben beschriebene, Ätzvorgang durchgeführt wird.

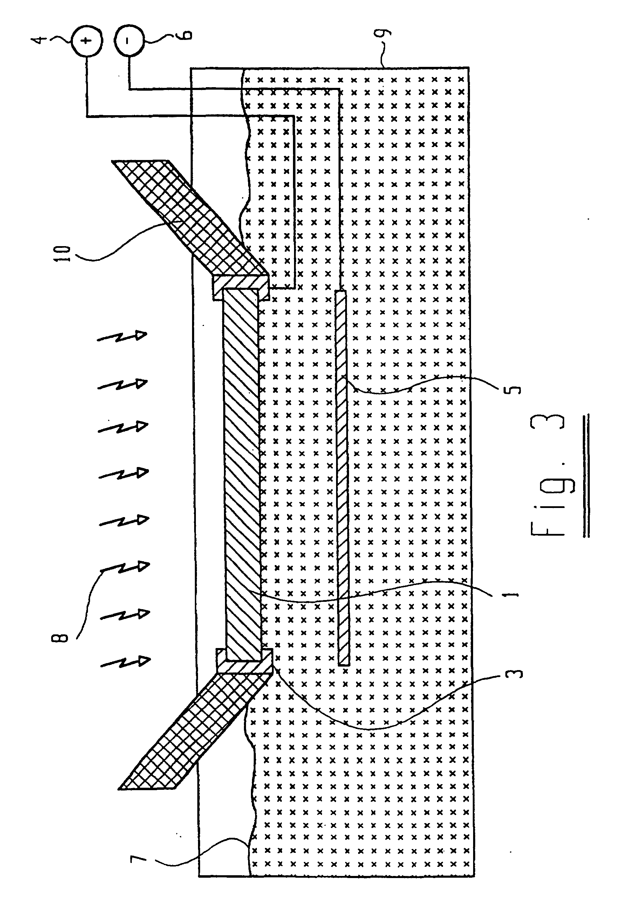

Fig. 3 zeigt schematisch einen Rohling 1, dessen Halterung 3 mit der Anode 4 einer Stromquelle verbunden ist. Die Halterung hat hier schräg nach oben aus der Ätzlösung 7 herausragende Randbereiche 10, die die der Ätzflüssigkeit 7 abgewandte Rückseite des Rohlings gegen Ätzflüssigkeit abschirmt. Die Randbereiche 10 können aber auch senkrecht aus der Ätzflüssigkeit herausragen. Dadurch wird die Rückseite des Rohlings nicht von der Ätzflüssigkeit benetzt und der Rohling kann entsprechend tiefer in die Ätzlösung, die sich in einem Behälter 9 befindet, eingetaucht werden. Die genannte Rückseite des Rohlings kann dann während des Ätzvorganges zur Erzeugung der Minoritätsladungsträger mit Licht 8 bestrahlt werden. Die Randbereiche 10 sind aus einem gegen die Ätzlösung resistenten Material. Wird als Ätzmittel eine flußsäurehaltige Lösung verwendet, so empfiehlt sich beispielsweise Polyethylen, Platin o.ä. Die Randbereiche 10 können aus demselben Material wie die Halterung 3 sein. Sie können aber auch aus anderem Material sein und müssen nicht unbedingt elektrisch leitfähig sein, da der elektrische Anschluß auch direkt an der Halterung 3 erfolgen kann.

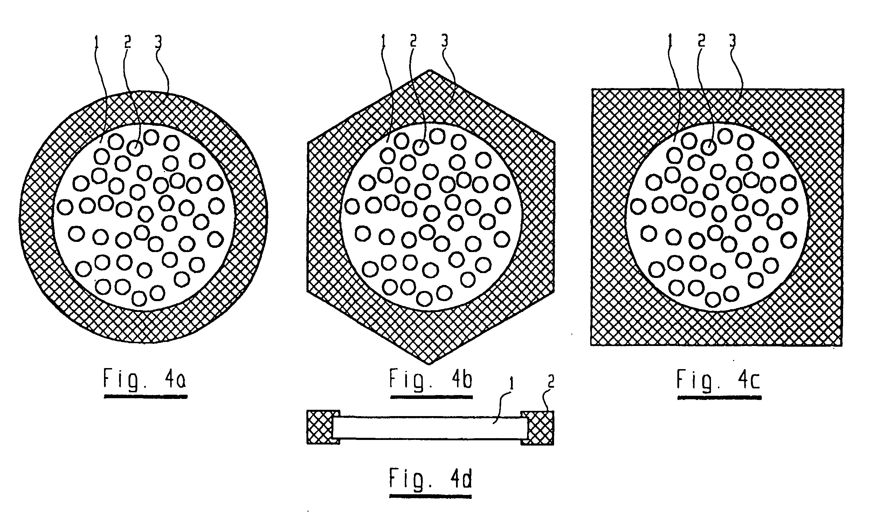

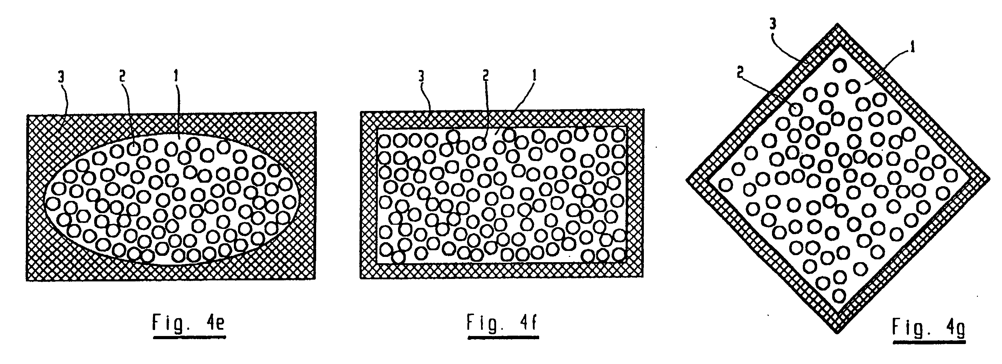

Fig. 4 zeigt verschiedene Formen der Halterung. Bei in der Draufsicht kreisförmigem Rohling 1 ist in Fig. 4a die Halterung 3 kreisringförmig, in Fig. 4b sechseckig und in Fig. 4c quadratisch. In den Fig. 4e und 4f ist die Halterung 3 rechteckig, wobei der Rohling 1 in Fig. 4e ellipsenförmig und in Fig. 4f rechteckig ist. Fig. 4g zeigt einen Rohling 1 und eine Halterung 3, die quadratisch sind. Selbstverständlich sind auch andere als die gezeigten Formen möglich.

Generell ist die Halterung vorzugsweise so zu wählen, daß sie für den späteren Einbau des Filters in Rohre, Kanäle etc. schon die passende Form hat. Weiterhin ist es möglich, eine für den späteren Einbau geeignete Halterung erst nach dem Ätzvorgang am Filter anzubringen. Die Halterungen können also vor oder nach dem Ätzvorgang angebracht werden.

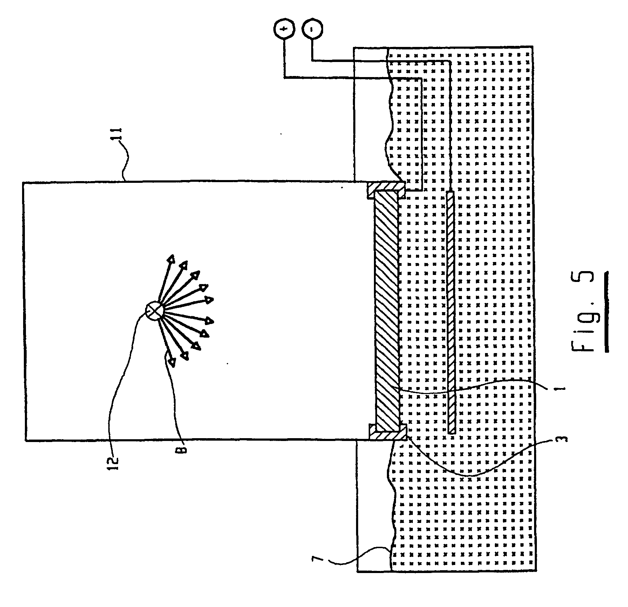

Fig. 5 zeigt eine Halterung 3 mit einem kreiszylindrischen Schirm 11, der den Rohling 1 in Draufsicht umschließt. Innerhalb des Schirms 11 ist eine Lichtquelle 12 angeordnet, von der die Lichtpfeile 8 ausgehen. Der Schirm 11 kann innen verspiegelt sein, wodurch sich die auf den Rohling 1 auftreffende Lichtleistung vergrößert. Der Schirm 11 kann einteilig mit der Halterung 3 verbunden sein und nach dem Ätzvorgang vom Rohling 1 abgenommen werden. Alternativ dazu ist es auch möglich, den Schirm 11 als separates Teil auszuführen, der nach dem Ätzvorgang von der Halterung 3 abgenommen und erneut verwendet wird.

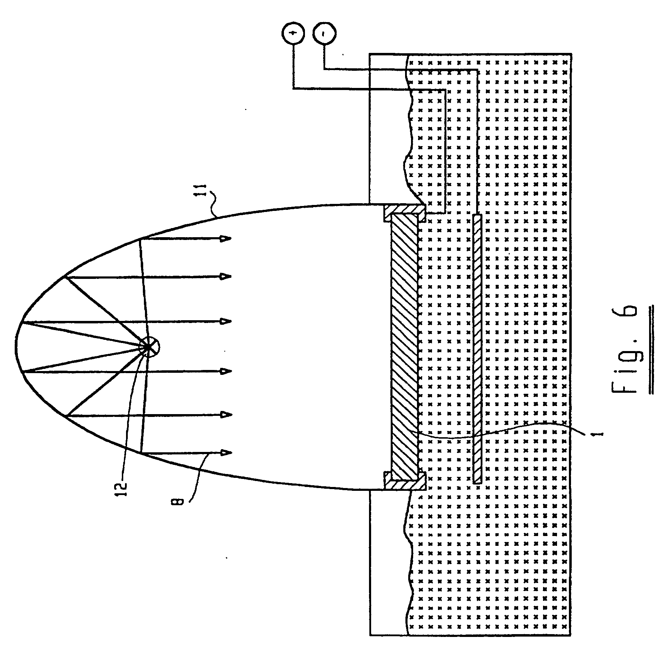

Fig. 6 zeigt ein Ausführungsbeispiel, bei dem der Schirm 11 die Form eines Paraboloids hat, wobei die Lichtquelle 12 in dessen Brennpunkt angeordnet ist. Im gezeigten Ausführungsbeispiel ist das Paraboloid an seiner Innenseite verspiegelt, so daß die von der Lichtquelle 12 abgegebenen Lichtstrahlen so reflektiert werden, daß sie parallel zueinander und senkrecht auf den Rohling 1 auftreffen. Hierdurch läßt sich eine sehr gleichmäßige bzw. homogene Ausleuchtung des Rohlings 1 erreichen.

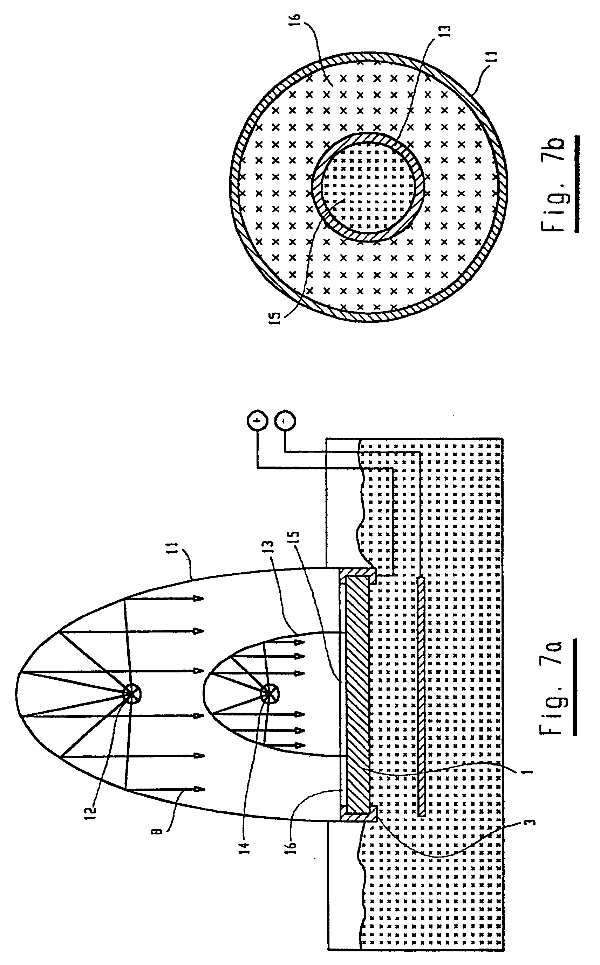

Fig. 7a zeigt ein Ausführungsbeispiel ähnlich Fig. 6, bei dem innerhalb des parabolförmigen Schirms 11 ein zweiter Schirm 13 angeordnet ist, in dessen Brennpunkt eine zweite Lichtquelle 14 angeordnet ist, die beispielsweise eine andere Intensität als die Lichtquelle 12 haben kann. Hierdurch ergeben sich auf dem Rohling 1 ein kreisförmiger Beleuchtungsbereich 15 und ein diesen umschließender ringförmiger Beleuchtungsbereich 16. Infolge der unterschiedlichen Beleuchtungsstärken in den Beleuchtungsbereichen 15 bzw. 16 werden während des Ätzvorganges zwei Filterbereiche mit entsprechend unterschiedlichen Filtereigenschaften - wie Porendurchmesser oder Porendichte - erhalten. Der innere Schirm 13 kann ebenfalls an seiner Innenseite und gegebenenfalls auch an seiner Außenseite verspiegelt sein.

Fig. 7b zeigt eine Draufsicht auf Fig. 7a in Schnittdarstellung, bei der die beiden Beleuchtungsbereiche 15 und 16 durch unterschiedliche Schraffuren gekennzeichnet sind.

Alternativ zu den in Fig. 7a gezeigten ineinandergeschachtelten parabolförmigen Schirmen 11 bzw. 13, können auch mehrere - z.B. kastenförmige Schirme ineinandergeschachtelt oder nebeneinander angeordnet sein, wodurch sich auf dem Rohling 1 entsprechende rechteckige Beleuchtungsbereiche ergeben, die "ineinander" bzw. nebeneinander liegen.

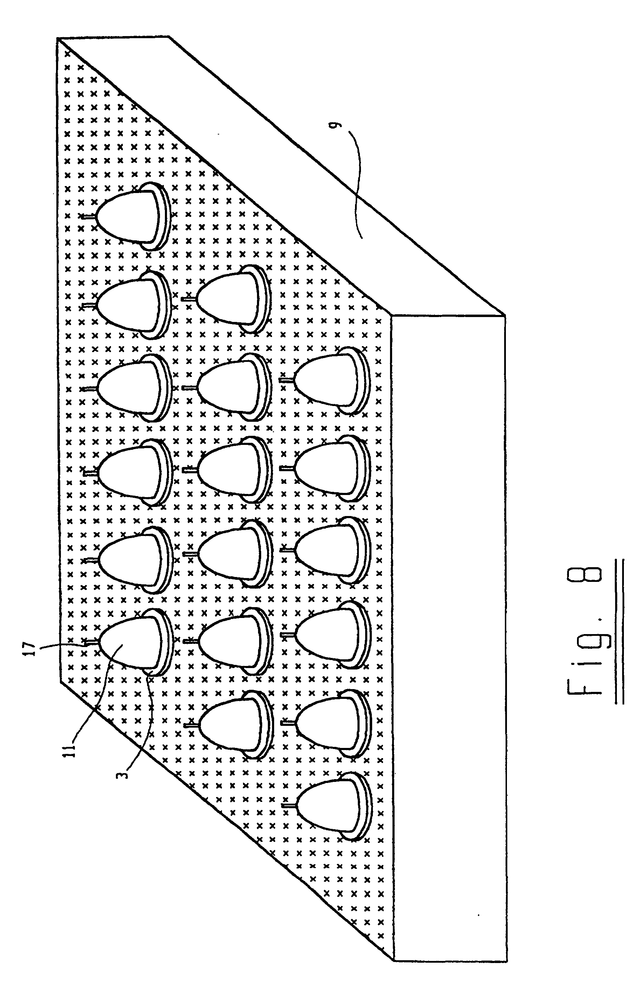

In Fig. 8 ist eine chargenweise Herstellung von Filtern dargestellt, bei der eine Vielzahl von Rohlingen, die an identischen Halterungen 3 bzw. Schirmen 11 befestigt sind, in einem Arbeitsgang in einen mit Ätzflüssigkeit gefüllten Behälter 9 eingetaucht werden können. Zum Anheben und Eintauchen der Rohlinge sind an den Außenseiten der Schirme 11 Stifte 17 vorgesehen, die mit einer nicht dargestellten Hebevorrichtung verbunden sind. Die elektrischen Verbindungen sind in Fig. 8 ebenfalls nicht dargestellt.

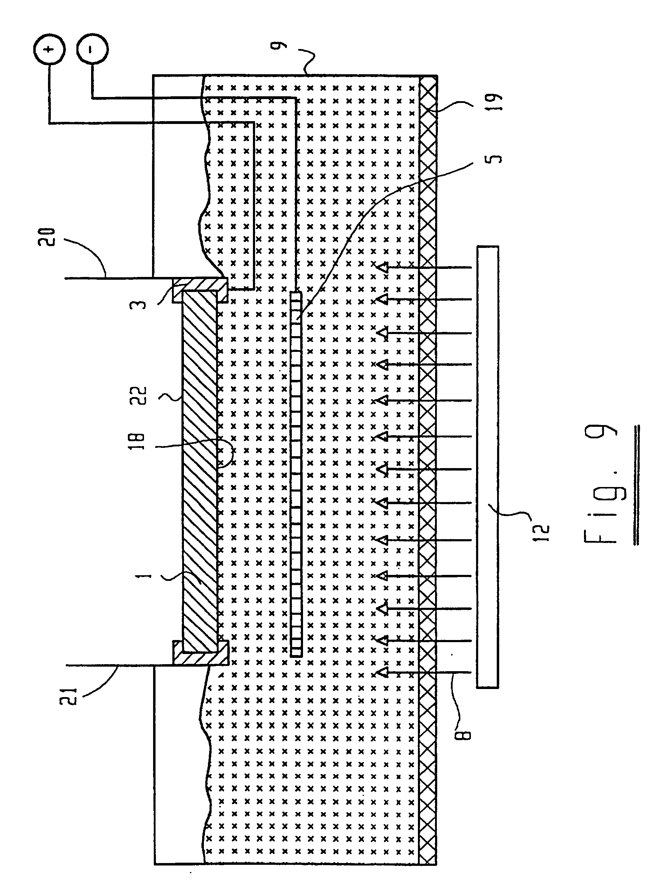

Fig. 9 zeigt ein Ausführungsbeispiel, bei dem der Rohling 1 auf seiner mit Ätzflüssigkeit benetzten Seite 18 beleuchtet wird, wobei die Lichtquelle 12 außerhalb des Behälters 9 angeordnet ist. Der Behälter 9 weist hierzu einen Boden 19 auf, der aus lichtdurchlässigem Material besteht, so daß die durch die Lichtpfeile 8 dargestellten Lichtstrahlen in das Innere des Behälters 9 eintreten können und den Rohling 1 beleuchten. Die Gegenelektrode 5 kann beispielsweise ein Gitter sein, wodurch eine gute Ausleuchtung der Seite 18 des Rohlings 1 erreicht wird. Die Halterung 3 mit ihren Seitenwänden 20 und 21 hat auch hier die Funktion, die der Seite 18 gegenüberliegende Seite 22 des Rohlings 1 vor einer Benetzung mit Ätzflüssigkeit zu schützen.

Die außerhalb des Behälters 9 angeordnete Lichtquelle 12 kann beispielsweise eine diffus leuchtende "Leuchtscheibe" sein oder eine z.B. durch mehrere Leuchtstoffröhren oder andere Lichtquellen gebildete "Leuchtfläche". Durch eine derartige Anordnung der Lichtquelle 12 läßt sich die Baugröße der Vorrichtung reduzieren. Alternativ zu dem in Fig. 9 gezeigten Ausführungsbeispiel kann diese Anordnung auch bei der in Fig. 8 gezeigten chargenweisen Herstellung von Filtern verwendet werden, wobei sämtliche Rohlinge mit nur einer oder wenigen außerhalb des Behälters 9 angeordneten Lichtquellen 12 bestraht werden können.

**Patentansprüche**

1. Verfahren zur Herstellung von Filtern, bei dem mindestens ein Rohling aus n- oder p-dotiertem ätzbarem Halbleitermaterial je nach Dotierung als Anode oder Kathode verschaltet wird;
eine erste Seite des Rohlings zumindest zum Teil mit einer Ätzlösung in Kontakt gebracht wird und elektrochemisch geätzt wird;
die erste Seite und/oder eine zweite Seite des Rohlings mit Licht bestrahlt wird,
**dadurch gekennzeichnet, daß**
an dem Rohling (1) ein Halteelement (3) befestigt wird, das gegenüber der Ätzlösung chemisch beständig ist,
daß das Halteelement (3) und der Rohling (1) in die Ätzflüssigkeit eingetaucht werden, bis die erste Seite des Rohlings benetzt ist, wobei das Halteelement (3) derart mit dem Rohling (1) verbunden ist, daß Berührflächen zwischen dem Halteelement (3) und dem Rohling (1) ätzflüssigkeitsfrei bleiben.

2. Verfahren nach Anspruch 1, **dadurch gekennzeichnet, daß** das Halteelement (3) auf einer der ersten Seite des Rohlings (1) gegenüberliegenden Seite einen Schirm (11, 13) aufweist, in dessen Innerem eine Lichtquelle (12, 14) angeordnet ist.

3. Verfahren nach Anspruch 2, **dadurch gekennzeichnet, daß** der Schirm (11, 13) mit einer lichtreflektierenden Beschichtung beschichtet ist.

4. Verfahren nach einem der Ansprüche 1 bis 3, **dadurch gekennzeichnet, daß** der Schirm (11, 13) kreiszylindrisch ist.

5. Verfahren nach einem der Ansprüche 1 bis 3, **dadurch gekennzeichnet, daß** der Schirm (11, 13) paraboloidförmig ist und daß die Lichtquelle (12, 14) im Brennpunkt angeordnet ist.

6. Verfahren nach einem der Ansprüche 2 bis 5, **dadurch gekennzeichnet, daß** das Halteelement (3) mehrere Schirme (11, 13) aufweist.

7. Verfahren nach einem der Ansprüche 1 bis 6, **dadurch gekennzeichnet, daß** der Rohling (1) ein Siliziumplättchen ist, das mit einer Dotierstoffkonzentration im Bereich von $10^{15}$ bis $10^{19}$ cm$^{-3}$ dotiert ist.

8. Verfahren nach einem der Ansprüche 1 bis 7, **dadurch gekennzeichnet,**
**daß** der Rohling (1) n-dotiert und als Anode verschaltet ist.

9. Verfahren nach einem der Ansprüche 1 bis 8, **dadurch gekennzeichnet,**
**daß** die Ätzlösung Flußsäure mit einem Fluoridgehalt in der Größenordnung von 2 bis 25% ist.

10. Verfahren nach einem der Ansprüche 1 bis 9, **dadurch gekennzeichnet,**
**daß** der Rohling (1) vor dem elektrochemischen Ätzen mit einer Lochmaske abgedeckt und seine Oberfläche im Bereich der Löcher der Lochmaske chemisch angeätzt wird.

11. Verfahren nach einem der Ansprüche 1 bis 10, **dadurch gekennzeichnet,**
**daß** die Lichtquelle (12) außerhalb eines mit Ätzflüssigkeit gefüllten Behälters (9) angeordnet ist, welcher eine lichtdurchlässige Wandung (19) aufweist und daß die Lichtquelle (12) so angeordnet ist, daß das Licht durch die Wandung (12) und durch die Ätzflüssigkeit tritt und die erste Seite (18) des Rohlings (1) beleuchtet.

## Claims

1. Process for the production of filters, in which at least one blank made of n- or p-doped, etchable semiconductor material is connected as an anode or a cathode, depending on the doping;
a first side of the blank is brought, at least in part, in contact with an etching solution and is etched electrochemically;
the first side and/or a second side of the blank is irradiated with light;
**characterized in that** a holding element (3), which is chemically resistant with respect to the etching solution, is affixed to the blank (1),
**that** the holding element (3) and the blank (1) are immersed in the etching liquid, until the first side of the blank is wetted, wherein the holding element (3) is connected with the blank (1) in such a way that contact areas between the holding element (3) and the blank (1) remain free of etching liquid.

2. Process according to Claim 1, **characterized in that** the holding element (3) has a shield (11, 13), in whose interior a light source (12, 14) is located, on a side opposite the first side of the blank (1).

3. Process according to Claim 2, **characterized in that** the shield (11, 13) is coated with a light-reflecting coating.

4. Process according to one of Claims 1-3, **characterized in that** the shield (11, 13) is circular-cylindrical.

5. Process according to one of Claims 1-3, **characterized in that** the shield (11, 13) is paraboloid-shaped and that the light source (12, 14) is located in the focal point.

6. Process according to one of Claims 2-5, **characterized in that** the holding element (3) has several shields (11, 13).

7. Process according to one of Claims 1-6, **characterized in that** the blank (1) is a silicon plate, which is doped with a doping substance concentration in the range of $10^{15}$ to $10^{19}$ cm$^{-3}$.

8. Process according to one of Claims 1-7, **characterized in that** the blank (1) is n-doped and connected as an anode.

9. Process according to one of Claims 1-8, **characterized in that** the etching solution is hydrofluoric acid with a fluoride content on the order of magnitude of 2-25%.

10. Process according to one of Claims 1-9, **characterized in that** the blank (1) is covered with a perforation mask before the electrochemical etching and its surface is etched chemically in the area of the holes of the perforation mask.

11. Process according to one of Claims 1-10, **characterized in that** the light source (12) is located outside a container (9), filled with etching liquid, which has a transparent wall (19) and that the light source (12) is located so that the light penetrates the wall (12) and the etching liquid and illuminates the first side (18) of the blank (1).

## Revendications

1. Procédé de production de filtres, dans lequel au moins une ébauche en matériau semi-conducteur attaquable dopé n ou p est montée en anode ou cathode, selon le dopage ;
une première face de l'ébauche est mise en contact, au moins en partie, avec une solution caustique et est attaquée électrochimiquement ;
la première face et/ou une deuxième face de l'ébauche est exposée à des rayons lumineux,
**caractérisé en ce que**
sur l'ébauche (1) est fixé un élément de support (3) qui est chimiquement stable vis-à-vis de la solution caustique,
l'élément de support (3) et l'ébauche (1) sont plongés dans le liquide caustique jusqu'à ce que la première face de l'ébauche soit mouillée, l'élément de support (3) étant en l'occurrence relié à l'ébauche (1) de telle manière que les surfaces de contact entre l'élément de support (3) et l'ébauche (1) restent exemptes de liquide caustique.

2. Procédé selon la revendication 1, **caractérisé en ce que** l'élément de support (3) présente sur une face opposée à la première face de l'ébauche (1) un réflecteur (11, 13) à l'intérieur duquel est placée une source lumineuse (12, 14).

3. Procédé selon la revendication 2, **caractérisé en ce que** le réflecteur (11, 13) est enduit d'un revêtement réfléchissant la lumière.

4. Procédé selon l'une des revendications 1 à 3, **caractérisé en ce que** le réflecteur (11, 13) a la forme d'un cylindre circulaire.

5. Procédé selon l'une des revendications 1 à 3, **caractérisé en ce que** le réflecteur (11, 13) est paraboloïdal et que la source lumineuse (12, 14) est placée dans le foyer.

6.  Procédé selon l'une des revendications 2 à 5, **caractérisé en ce que** l'élément de support (3) présente plusieurs réflecteurs (11, 13).

7.  Procédé selon l'une des revendications 1 à 6, **caractérisé en ce que** l'ébauche (1) est une plaquette de silicium qui est dopée avec une concentration de dopant allant de $10^{15}$ à $10^{19}$ cm$^{-3}$.

8.  Procédé selon l'une des revendications 1 à 7, **caractérisé en ce que** l'ébauche (1) est dopée n et montée en anode.

9.  Procédé selon l'une des revendications 1 à 8, **caractérisé en ce que** la solution caustique est de l'acide fluorhydrique avec une teneur en fluorure de l'ordre de 2 à 25 %.

10. Procédé selon l'une des revendications 1 à 9, **caractérisé en ce que** avant l'attaque électrochimique, l'ébauche (1) est recouverte d'un masque perforé, et sa surface est attaquée chimiquement dans la zone des trous du masque perforé.

11. Procédé selon l'une des revendications 1 à 10, **caractérisé en ce que** la source lumineuse (12) est placée à l'extérieur d'un récipient (9) rempli de liquide caustique et présentant une paroi transparente (19), et la source lumineuse (12) est disposée de telle sorte que la lumière traverse la paroi (12) et le liquide caustique et éclaire la première face (18) de l'ébauche (1).

Fig. 1

Fig. 2

Fig. 3

Fig. 4a

Fig. 4b

Fig. 4c

Fig. 4d

Fig. 4g

Fig. 4f

Fig. 4e

Fig. 5

Fig. 6

Fig. 7b

Fig. 7a

Fig. 8

EP 1 007 767 B1

Fig. 9

EP 1 007 767 B1